# EUROPEAN PATENT APPLICATION

(11) **EP 4 844 845 A1**
(43) Date of publication of application: **25.11.2026**
(21) Application number: 24918599.2
(22) Date of filing: 24.07.2024
(51) Int. Cl.: H01M 8/0228, C25B 9/00, C25B 9/65, H01M 8/0213, H01M 8/0221

(54) **ELECTROCONDUCTIVE SHEET**

(30) Priority: 19.01.2024 JP 2024006826
(71) Applicant: MITSUBISHI PENCIL COMPANY, LIMITED, Tokyo 140-8537 (JP)
(72) Inventor: TAKAHASHI, Toshihiro, Fujioka-shi, Gunma 375-8501 (JP); KUBO, Ryota, Fujioka-shi, Gunma 375-8501 (JP); HANAZATO, Kazuya, Fujioka-shi, Gunma 375-8501 (JP)
(74) Representative: Vossius & Partner Patentanwälte Rechtsanwälte mbB
(86) International application number: PCT/JP2024/026447
(87) International publication number: WO 2025/154310

(57) **Abstract**

As shown in FIG. 1, an electroconductive sheet 10 according to the present invention has a first electroconductive layer 12 and a second electroconductive layer 14. The first electroconductive layer 12 contains a first thermoplastic resin 122 and first electroconductive particles 124. At least some of the first electroconductive particles 124 penetrate the thickness of the first electroconductive layer 12. The second electroconductive layer 14 contains a second thermoplastic resin and electroconductive fibers. The electroconductive fibers are arranged so as to extend in the direction of the surface of the second electroconductive layer 14.

## Description

### TECHNICAL FIELD

The present invention relates to an electroconductive sheet, and particularly to an electroconductive sheet which can be used as a separator for a fuel cell.

### BACKGROUND ART

There have conventionally been developed, as electroconductive sheets to be used as fuel cell separators, those made of metal materials and those made of carbon materials. Fuel cell separators made of carbon materials are useful in terms of the lightness and chemical resistance compared to those mainly using metal materials. Meanwhile, fuel cell separators made of carbon materials sometimes do not have sufficient strength, and the probability of gas leakage due to crack generation is higher than those made of metals. Fuel cell separators made of carbon materials have such drawback that the conductivity deteriorates when binder components such as resin are increased to prevent cracking. Various proposals have been made to solve these problems.

PTL 1 discloses a separator for a fuel cell, characterized by including an electroconductive gas blocking layer (B) on an electroconductive layer (A) obtained by binding and solidifying the electroconductive fiber with a synthetic resin.

PTL 2 discloses a fuel cell separator precursor obtained by impregnating a porous sheet containing an electroconductive filler with a resin composition containing a thermoplastic resin and an electroconductive filler.

### [CITATION LIST]

### [PATENT LITERATURE]

[PTL 1] JP 2001-15131 A
[PTL 2] JP 2019-40719 A

### SUMMARY

### [TECHNICAL PROBLEM]

The present invention provides a novel electroconductive sheet capable of having satisfactory gas impermeability and conductivity.

### [SOLUTION TO PROBLEM]

As a result of intensive studies, the present inventors have found that the following means can resolve the above problems, and thus the present invention has been completed. Namely, the present invention is as follows.
<Aspect 1> An electroconductive sheet including a first electroconductive layer and a second electroconductive layer, wherein
   the first electroconductive layer contains a first thermoplastic resin and first electroconductive particles, and at least a part of the first electroconductive particles penetrate the thickness of the first electroconductive layer, and
   the second electroconductive layer contains a second thermoplastic resin and electroconductive fibers, and the electroconductive fibers are arranged to spread in the plane direction of the second electroconductive layer.
<Aspect 2> The electroconductive sheet according to aspect 1, including the first electroconductive layer, the second electroconductive layer, and the other first electroconductive layer in this order.
<Aspect 3> The electroconductive sheet according to aspect 1, including the second electroconductive layer, the first electroconductive layer, and the other second electroconductive layer in this order.
<Aspect 4> The electroconductive sheet according to any one of aspects 1 to 3, wherein the first electroconductive particle has a particle diameter, as measured by laser diffraction method, of 100 µm or more and 300 µm or less.
<Aspect 5> The electroconductive sheet according to any one of aspects 1 to 4, wherein the first electroconductive particle is a carbonaceous particle.
<Aspect 6> The electroconductive sheet according to any one of aspects 1 to 5, wherein the electroconductive fibers are a carbon fibers.
<Aspect 7> The electroconductive sheet according to any one of aspects 1 to 6, wherein the second electroconductive layer further contains a second electroconductive particle.
<Aspect 8> The electroconductive sheet according to any one of aspects 1 to 7, wherein the first thermoplastic resin contains at least polyamide.
<Aspect 9> The electroconductive sheet according to any one of aspects 1 to 8, wherein the second thermoplastic resin contains at least polyphenylene sulfide or polyamide.
<Aspect 10> The electroconductive sheet according to any one of aspects 1 to 9, which is a separator for a fuel cell.
<Aspect 11> A fuel cell including the electroconductive sheet according to aspect 10.

### [ADVANTAGEOUS EFFECTS OF INVENTION]

According to the present invention, it is possible to provide a novel electroconductive sheet capable of having satisfactory gas impermeability and conductivity.

### BRIEF DESCRIPTION OF DRAWINGS

FIG. 1 is a side cross-sectional view of a first aspect of the electroconductive sheet of the present invention.
FIG. 2(a) is a side cross-sectional view of a second aspect of the electroconductive sheet of the present invention. FIG. 2(b) is a side cross-sectional view of a third aspect of the electroconductive sheet of the present invention.
FIG. 3 is a reduced side cross-sectional view of the second aspect of the electroconductive sheet of the present invention.

### DESCRIPTION OF EMBODIMENTS

### <<Electroconductive Sheet >>

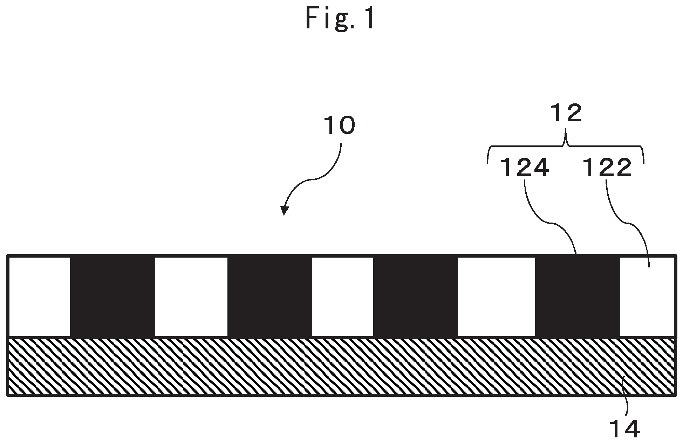

As shown in FIG. 1, the electroconductive sheet 10 of the present invention includes:
a first electroconductive layer 12 and a second electroconductive layer 14,
the first electroconductive layer 12 contains a first thermoplastic resin 122 and first electroconductive particles 124, and at least a part of the electroconductive particles 124 penetrate the thickness of the first electroconductive layer 12, and
the second electroconductive layer 14 contains a second thermoplastic resin and electroconductive fibers, and the electroconductive fibers are arranged to spread in the plane direction of the second electroconductive layer 14.

In the first electroconductive layer mentioned above, at least a part of the first electroconductive particles penetrate the thickness of the first electroconductive layer, thus making it possible to obtain satisfactory gas impermeability while ensuring the conductivity in the thickness direction of the first electroconductive layer. Meanwhile, in the second electroconductive layer mentioned above, the electroconductive fibers are arranged to spread in the plane direction of the second electroconductive layer, thus making it possible to ensure the conductivity in the plane direction. In the second electroconductive layer mentioned above, the arrangement of the electroconductive fibers to spread in the plane direction of the second electroconductive layer makes it possible to maintain the strength of the second electroconductive layer according to the tensile strength of the electroconductive fibers.

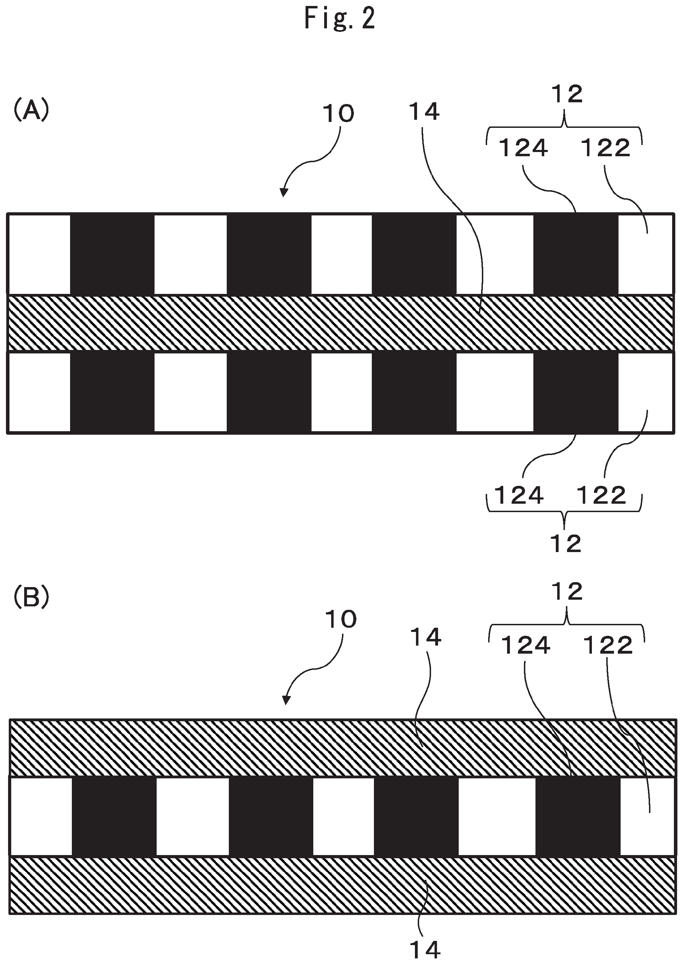

As shown in FIG. 2(a), the electroconductive sheet according to the second aspect of the present invention includes the first electroconductive layer 12, the second electroconductive layer 14, and the other first electroconductive layer 12 in this order.

As shown in FIG. 2(b), the electroconductive sheet according to the third aspect of the present invention includes the second electroconductive layer 14, the first electroconductive layer 12, and the other second electroconductive layer 14 in this order.

The electroconductive sheet of the present invention is capable of having satisfactory conductivity and gas impermeability without using an expanded graphite sheet. In other words, the electroconductive sheet of the present invention does not need to have an expanded graphite sheet.

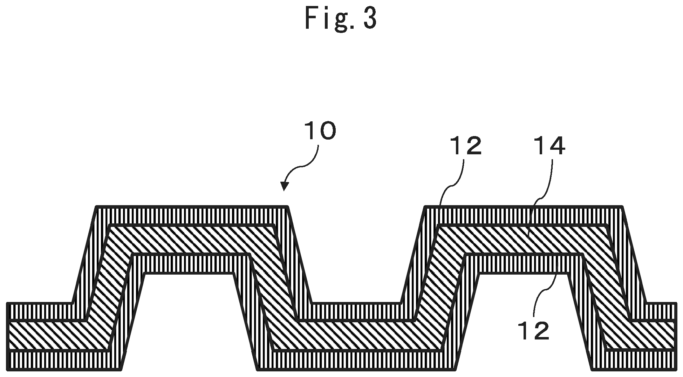

In the electroconductive sheet of the present invention, the first electroconductive layer and the second electroconductive layer contain a thermoplastic resin, so that the first electroconductive layer and the second electroconductive layer can be integrally molded into an uneven shape, as shown in FIG. 3, without impairing the gas permeability.

The electroconductive sheet of the present invention can be used, in particular, as a separator for a fuel cell. The electroconductive sheet of the present invention can also be used as a bipolar plate for a redox flow battery or a water electrolysis device.

Each component of the present invention will be described below.

### <First Electroconductive Layer>

The first electroconductive layer contains a first thermoplastic resin and first electroconductive particles, and at least a part of the first electroconductive particles penetrate the thickness of the first electroconductive layer.

The thickness of the first electroconductive layer may be 30 µm or more and 300 µm or less. This thickness may be 30 µm or more, 40 µm or more, 50 µm or more, 60 µm or more, 70 µm or more, or 80 µm or more, and may also be 300 µm or less, 250 µm or less, 220 µm or less, 200 µm or less, 180 µm or less, 150 µm or less, 140 µm or less, 130 µm or less, 120 µm or less, or 100 µm or less.

### (First Thermoplastic Resin)

It is preferable to use, as the first thermoplastic resin, a resin having properties which withstand the chemical environment of a fuel cell, and which do not soften or melt at the reaction temperature of the fuel cell, and also which soften or melt during press molding. Examples of such resin include polypropylene, polyethylene, polyamide, polyphenylene sulfide (PPS), polyvinylidene fluoride (PVDF), polyetherimide (PEI), polyethylene terephthalate (PET), polyethylene naphthalate (PEN), liquid crystal polymer (LCP), polyimide (PI), polycarbonate (PC), polyphenylene ether (PPE), polysulfone (PSU), polyethersulfone (PES), polyetheretherketone (PEEK), polyurethane, epoxy resin, silicone resin, urea resin, phenol resin, thermosetting polyimide, thermosetting isocyanate, and polymers or mixtures of two or more of the above.

In particular, when the first electroconductive particles are carbonaceous particles, the first thermoplastic resin should at least contain polar resins such as polyamide, polyimide, polyurethane, epoxy resin and urea resin, and the use of these resins is particularly preferable because it improves the wettability with the first electroconductive particles, thereby improving the gas impermeability at the interface between the first thermoplastic resin and the first electroconductive particles. It is possible to use as the polyamide, for example, nylon, particularly semi-aromatic nylon.

The melting point of the first thermoplastic resin may be 200°C or higher, 210°C or higher, 220°C or higher, 230°C or higher, 240°C or higher, 250°C or higher, or 260°C or higher, and may also be 350°C or lower, 340°C or lower, 330°C or lower, 320°C or lower, 310°C or lower, 300°C or lower, 290°C or lower, or 280°C or lower. In particular, the melting point of the first thermoplastic resin may be the same as that of the second thermoplastic resin, lower than that of the second thermoplastic resin, or higher than that of the second thermoplastic resin.

The glass transition temperature (Tg) of the first thermoplastic resin may be 70°C or higher, 80°C or higher, or 90°C or higher, and may also be 150°C or lower, 140°C or lower, or 130°C or lower.

Here, in the present invention, the melting point and the thermal decomposition temperature can be measured by a thermogravimetric-differential thermal analysis (TG-DTA) performed in a nitrogen atmosphere at a heating rate of 10°C/min. Specifically, the melting point and the thermal decomposition temperature can be determined by heating a sample in a nitrogen atmosphere at a heating rate of 10°C/min, and obtaining a curve (TG curve) in which the mass and the temperature are plotted on the ordinate and the abscissa, respectively, as well as a curve (DTA curve) in which the temperature difference and the temperature are plotted on the ordinate and the abscissa, respectively, by a thermogravimetric-differential thermal analysis (TG-DTA) according to JIS K0129. More specifically, when an endothermic peak is observed in the DTA curve at a position where a reduction in mass is not observed in the TG curve, the temperature assuming a minimum value of the peak can be defined as the melting point. When a downward shift of the baseline of the DTA curve is observed at a position where a reduction in mass is not observed in the TG curve, the temperature at the point where a line equidistant in the vertical direction from the extended line of each baseline intersects with the curve of the baseline transition region can be defined as the glass transition temperature (Tg).

### (First Electroconductive Particles)

At least a part of the first electroconductive particle penetrate the thickness of the first electroconductive layer.

The particle diameter of the first electroconductive particles may be, for example, 70 µm or more and 500 µm or less, for example, 70 µm or more, 80 µm or more, 90 µm or more, or 100 µm or more, and 500 µm or less, 480 µm or less, 450 µm or less, 430 µm or less, 400 µm or less, 380 µm or less, 350 µm or less, 330 µm or less, 300 µm or less, 280 µm or less, 250 µm or less, 230 µm or less, 200 µm or less, 190 µm or less, or 180 µm or less. In particular, the particle diameter of the first electroconductive particles may be larger than the thickness of the first electroconductive layer. The particle diameter of the first electroconductive particles can be adjusted by known grinding means such as a ball mill or a bead mill.

Here, in the present invention, "particle diameter" means the median diameter (D50) calculated on a volume basis using the laser diffraction method. Since this particle diameter is calculated on the assumption that the particles are spherical, the particle diameter of the first electroconductive particles may be larger than the thickness of the first electroconductive layer.

Carbonaceous particles can be used, for example, as the first electroconductive particles. Graphite particles and carbonaceous composite electroconductive fillers can be used as carbonaceous particles.

The content of the first electroconductive particles may be 25% by mass or more and 80% by mass or less based on the mass of the first electroconductive layer. This content may be 25% by mass or more, 30% by mass or more, 35% by mass or more, 40% by mass or more, 45% by mass or more, 50% by mass or more, or 55% by mass or more, and may also be 80% by mass or less, 75% by mass or less, 70% by mass or less, or 65% by mass or less.

### (First Electroconductive Particles: Carbonaceous Composite Electroconductive Filler Particles)

Carbonaceous composite electroconductive filler particles include graphite particles and amorphous carbon covering the graphite particles.

Existence of amorphous carbon on the surface of carbonaceous electroconductive filler particles can be confirmed by the integrated intensity ratio of the D-band (1,100 to 1,450 cm⁻¹) to the G-band (1,450 to 1,700 cm⁻¹) obtained from a Raman spectrum of the electroconductive filler being 0.5 or more and particularly being 0.5 or more and 1.1 or less. The ratio is less than 0.5 solely with graphite and more than 1.1 solely with amorphous carbon. Accordingly, the ratio being 0.5 or more and 1.1 or less is considered to be resulting from a spectrum derived from a bond of graphite origin together with a spectrum derived from a bond of amorphous carbon origin being obtained due to thinness of an amorphous carbon layer on the surface or existence of a gap in the amorphous carbon layer on the surface.

It should also be noted that while the graphite particles contained in the carbonaceous composite electroconductive filler particles may be graphite particles in any shape, such as a scaly shape, a spherical shape, a massive shape, or a flaky shape, a scaly or spherical graphite particles are preferably used from the viewpoint of the conductivity.

The ratio of the graphite particle to the total of the amorphous carbon and the graphite particle may be 10% by mass to 95% by mass in the composite electroconductive filler particles. A smaller ratio is preferable for suppressing the problem of peeling at an interface of the resin material and the graphite particles and/or cleavage of the graphite particles by covering the graphite particles by the amorphous carbon. Meanwhile, a larger ratio is preferable for utilizing satisfactory conductivity of the graphite particles. The ratio may be 10% by mass or more, 20% by mass or more, 30% by mass or more, 40% by mass or more, 50% by mass or more, 60% by mass or more, or 70% by mass or more, and may be 95% by mass or less, 90% by mass or less, 85% by mass or less, or 80% by mass or less.

Regarding the present invention, "the ratio of the graphite particles to the total of the amorphous carbon and the graphite particles" can be found with the residual factor (yield) of the graphite particles being used as 100% by mass, based on the weight ratios of various raw materials of the carbonaceous composite electroconductive filler particles in the production stage and the residual factor after burning.

D50 of the graphite particles dispersed in amorphous carbon in the carbonaceous composite electroconductive filler particles may be 1 µm to 100 µm. D50 of the graphite particles may be 1 µm or more, 2 µm or more, 3 µm or more, 4 µm or more, 5 µm or more, 7 µm or more, 10 µm or more, 15 µm or more, 25 µm or more, or 20 µm or more, and may be 100 µm or less, 90 µm or less, 80 µm or less, 70 µm or less, 60 µm or less, 50 µm or less, 40 µm or less, or 30 µm or less.

The carbonaceous composite electroconductive filler particles can be produced by any method. For example, the carbonaceous composite electroconductive filler particles can be obtained by obtaining a graphite particle-containing resin block in which graphite particles are dispersed in a resin material by dispersing the graphite particles in the resin material, optionally curing and/or infusibilizing the graphite particle-containing resin block, then amorphous carbonating the resin material by burning the block in an inert atmosphere, thereby obtaining a graphite particle-containing amorphous carbon block, and pulverizing and optionally sizing the graphite particle-containing amorphous carbon block. As for the method for dispersing graphite particles in a resin material, a known method can be employed.

Any thermoplastic resin or curable resin which is amorphous carbonated when being burned in an inert atmosphere may be used as a resin material being used to be amorphous carbonated. Examples of the thermoplastic resin include, but are not limited to, a thermoplastic polyimide resin (TPI), a chlorinated vinyl chloride resin (CPVC), a polyvinyl chloride resin (PVC), a polyetherimide resin (PEI), a polyacrylonitrile resin (PAN) and the like. Examples of the thermosetting resin include, but are not limited to, a polyimide resin, a furan resin, a phenol resin and the like.

### <Second Electroconductive Layer >

The second electroconductive layer contains a second thermoplastic resin and an electroconductive fibers, and the electroconductive fibers are arranged to spread in the plane direction of the second electroconductive layer.

The second electroconductive layer may further contain an optional second electroconductive particle.

### (Second Thermoplastic Resin)

It is possible to use, as the second thermoplastic resin, those listed as the first thermoplastic resin alone or in combination.

In particular, in the second aspect of the electroconductive sheet of the present invention, it is preferable, from the viewpoint of obtaining the chemical resistance, that at least polyphenylene sulfide (PPS) is included as the second thermoplastic resin, and in particular that it is used.

In the second aspect of the electroconductive sheet of the present invention, it is preferable, from the viewpoint of reducing the gas permeability, that at least polyamide is included as the second thermoplastic resin, and in particular that it is used.

For the melting point and glass transition temperature of the second thermoplastic resin, it is possible to refer to the description relating to the first thermoplastic resin.

### (Electroconductive Fibers)

It is possible to use, as the electroconductive fibers, for example, carbon fibers, metal fibers and the like.

It is possible to use, as the carbon fibers, for example, milled fibers and chopped fibers and the like. These fibers may be used alone or in combination.

The average length of the electroconductive fibers can be, for example, 100 µm or more, 300 µm or more, 500 µm or more, 1.0 mm or more, 1.5 mm or more, 2.0 mm or more, 2.5 mm or more, or 2.8 mm or more, and can also be 50.0 mm or less, 45.0 mm or less, 40.0 mm or less, 35.0 mm or less, 30.0 mm or less, 25.0 mm or less, 20.0 mm or less, 15.0 mm or less, 12.0 mm or less, 10.0 mm or less, 8.0 mm or less, 5.0 mm or less, 4.0 mm or less, or 3.5 mm or less.

The average fiber diameter of the electroconductive fibers can be 1 µm or more, 3 µm or more, or 5 µm or more, and can also be 50 µm or less, 40 µm or less, 30 µm or less, 20 µm or less, 15 µm or less, or 10 µm or less.

The content of the electroconductive fibers may be 10% by mass or more, 15% by mass or more, 20% by mass or more, 25% by mass or more, or 28% by mass or more, relative to the mass of the second electroconductive layer, and may also be 75% by mass or less, 70% by mass or less, 65% by mass or less, 60% by mass or less, 55% by mass or less, 50% by mass or less, 45% by mass or less, 40% by mass or less, 35% by mass or less, or 32% by mass or less.

### (Second Electroconductive Particle)

The second electroconductive particle may be a particle interposed between the electroconductive fibers.

The particle diameter of the second electroconductive particle may be 10 µm or more and 100 µm or less. This particle diameter may be 10 µm or more, 20 µm or more, or 30 µm or more, and may also be 200 µm or less, 180 µm or less, 150 µm or less, 130 µm or less, 100 µm or less, 90 µm or less, or 80 µm or less.

The content of the second electroconductive particle may be 5% by mass or more and 60% by mass or less, relative to the mass of the second electroconductive layer. This content may be 5% by mass or more, 10% by mass or more, 15% by mass or more, 20% by mass or more, 25% by mass or more, 30% by mass or more, or 35% by mass or more, and may also be 60% by mass or less, 55% by mass or less, 50% by mass or less, or 45% by mass or less.

### <<Fuel Cell>>

The fuel cell of the present invention includes the above-mentioned fuel cell separator.

The fuel cell may have a general structure as long as it includes the fuel cell separator mentioned above. For example, the fuel cell may include a fuel cell separator, a cathode gas diffusion layer, a cathode catalyst electrode layer, an electrolyte layer, an anode catalyst electrode layer, and a fuel cell separator in this order.

It is possible to use those known as components of the cathode gas diffusion layer, cathode catalyst electrode layer, electrolyte layer, anode catalyst electrode layer, and fuel cell.

### [EXAMPLES]

The present invention will be specifically described by way of Examples and Comparative Examples, but the present invention is not limited thereto.

### <<Fabrication of Separator for Fuel Cell >>

### <Example 1>

Using 50 parts by mass of a polyphenylene sulfide (PPS) fiber (melting point of 278°C, Tg of 93°C) as the second thermoplastic resin, and 50 parts by mass of a carbon fibers (length of more than 1 mm) as the electroconductive fibers, a nonwoven fabric sheet with a basis weight of 100 g/m² was fabricated by a dry process, and then cut into a diameter of 88 mm. Next, a carbonaceous composite electroconductive filler particle, pulverized into a particle diameter of less than 75 µm as the second electroconductive particles, was dispersed in ethanol at a concentration of 2% by mass to obtain a filler dispersion. This filler dispersion was added dropwise into the nonwoven fabric sheet in an amount 20 times the mass of the nonwoven fabric such that the second electroconductive particle was added at a concentration of 40% by mass, followed by drying to obtain a precursor for a second electroconductive layer.

Next, a 60 µm thick semi-aromatic nylon film (PA9T, melting point of 262°C, Tg of 125°C) as the first thermoplastic resin was cut into a diameter of 88 mm, and 0.5 g of the first electroconductive particle was evenly sprinkled thereon, and then the second electroconductive layer precursor was placed thereon. Next, 0.5 g of the first electroconductive particles were sprinkled thereon again, and the 60 µm thick semi-aromatic nylon film was placed thereon again to fabricate a five-layer structure of semi-aromatic nylon film/first electroconductive particle/second electroconductive layer precursor/first electroconductive particle/semi-aromatic nylon film. This was molded into a corrugated shape to obtain a flat separator for a fuel cell of Example 1 having first electroconductive layer/second electroconductive layer/first electroconductive layer in this order. Forming was performed by pressing at a temperature of 315°C under a pressure of 15 MPa, and then cooling under a pressure to 140°C before removal. As the first electroconductive particle, a carbonaceous composite electroconductive filler particle, pulverized into a particle diameter of 110 µm or more and less than 180 µm, was used. The content of the first electroconductive particle in the first electroconductive layer after molding was within a range of 50 to 60% by mass.

The cross-section of the resulting separator for a fuel cell was observed by a scanning electron microscope and, as a result, the thickness of the first electroconductive layer after molding was found to be within a range of 90 to 120 µm.

### <Example 2>

A fuel cell separator of Example 2 was fabricated in the same manner as in Example 1, except that 50 parts by mass of a semi-aromatic nylon (PA9T) fiber (melting point of 262°C, Tg of 125°C) was used instead of 50 parts by mass of the polyphenylene sulfide (PPS) fiber (melting point of 278°C, Tg of 93°C) as the second thermoplastic resin.

### <Example 3>

A separator for a fuel cell of Example 3 was fabricated in the same manner as in Example 1, except that a carbonaceous composite electroconductive filler particle with a particle diameter of 150 µm or more and less than 220 µm was used instead of the above carbonaceous composite electroconductive filler particle with a particle diameter of 110 µm or more and less than 180 µm.

### <Example 4>

A separator for a fuel cell of Example 4 was fabricated in the same manner as in Example 1, except that a 60 µm thick PPS film was used instead of the above nylon film.

### <Comparative Example>

A separator for a fuel cell of Comparative Example was fabricated by molding those, obtained by sandwiching a 100 µm thick expanded graphite sheet between the precursor for a second electroconductive layer fabricated in Example 1, in the same manner as in Example 1.

### <Reference Example>

A composition for an intervening electroconductive resin layer was applied to both surfaces of an expanded graphite sheet such that the film thickness after drying became 25 µm before sandwiching between nonwoven sheets, followed by drying to form an intervening electroconductive resin layer, sandwiching between the same nonwoven sheets as in Example 1, and further molding in the same manner as in Example 1, thus fabricating a separator for a fuel cell of Reference Example.

As the intervening electroconductive resin layer, those obtained by melt mixing of carbon black, graphite, CNT, and a PVDF resin with an NMP solvent were used.

### <<Evaluation>>

### <Gas Permeability>

The gas permeability of the thus fabricated separator for a fuel cell was measured by a differential pressure method conforming to "JIS K7126-1: 2006". Helium was used as a testing gas, and the pressure of the testing gas was set at 100 kPa (on the high-pressure side).

### <Resistance>

A carbon paper was placed on both sides of the thus fabricated separator for a fuel cell, followed by sandwiching between gold-plated flat electrodes and further application of the pressure of 1 MPa. Next, a current of 1 A was applied to these flat electrodes, and the resistance at the interface between the fabricated separator for a fuel cell and the carbon paper was measured by subtracting the resistance at the interface between the flat electrodes and the carbon paper from the resistance obtained by measuring the voltage between the electrodes.

### <Acid Resistance>

The thus fabricated separator for a fuel cell was cut into a rectangle 3 mm wide and 30 mm long, and the bending strength (three-point bending) was measured with a support distance of 20 mm. Next, the bending strength was measured before and after immersion in an aqueous pH 2 sulfuric acid solution at 80°C for 96 hours, and the acid resistance was evaluated according to the following criteria:
A: The reduction in bending strength after immersion was 5% or less.
B: The reduction in bending strength after immersion was more than 5%.

Table 1 shows the structures and evaluation results of Examples, Comparative Example and Reference Example. Note that "Unmeasurable" for gas permeability in Table 1 indicates that the amount of gas permeation over time could not be measured due to the rupture of the separator for a fuel cell.

### [Table 1]

**Table 1**

| | | | | Example 1 | Example 2 | Example 3 | Example 4 | Comparative Example | Reference Example |
|---|---|---|---|---|---|---|---|---|---|
| Structure | Outermost layer | Thermoplastic resin | | Ny | Ny | Ny | PPS | PPS | PPS |
| | | Electrocondu ctive particle | Type | Carbonaceous composite | Carbonaceous composite | Carbonaceous composite | Carbonaceous composite | Carbonaceous composite | Carbonaceous composite |
| | | | Particle diameter (µm) | 110 to 180 | 110 to 180 | 150 to 220 | 110 to 180 | 110 to 180 | 110 to 180 |
| | Intermediate layer | Thermoplastic resin | | PPS | Ny | PPS | PPS | Expanded graphite sheet | Expanded graphite sheet (including intervening resin layer) |
| | | Electrocondu ctive particle | Type | Carbonaceous composite | Carbonaceous composite | Carbonaceous composite | Carbonaceous composite | | |
| | | | Particle diameter (µm) | <75 | <75 | <75 | <75 | | |
| Evaluation results | Gas transmittance (cm³ sec⁻¹cm⁻²) | | | 7.38 × 10⁻⁷ | 2.90 × 10⁻⁸ | 1.34 × 10⁻⁵ | 8.12 × 10⁻⁵ | Unmeasurable | 6.77 × 10⁻⁴ |
| | Resistance value (mΩ·cm²) | | | 10 | 7 | 7 | 23 | 27 | 22 |
| | Acid resistance (bending strength) | | | A | A | A | A | A | A |

Table 1 shows that the separators for a fuel cell of Examples have satisfactory gas impermeability and conductivity. In particular, regarding gas impermeability, the separators for a fuel cell of Examples showed better results than those of the separators for a fuel cell of Comparative Example and Reference Example which used the expanded graphite sheet.

Furthermore, the separators for a fuel cell of Examples 1 to 3, which used polyamide as the first thermoplastic resin, exhibited particularly satisfactory gas permeability and resistance values.

The separators for a fuel cell of Examples exhibited acid resistance equivalent to that of Comparative Example and Reference Example which used the expanded graphite sheets.

### REFERENCE SIGNS LIST

10: Electroconductive sheet
12: First electroconductive layer
122: First thermoplastic resin
124: First electroconductive particle
14: Second electroconductive layer

## Claims

1. An electroconductive sheet including a first electroconductive layer and a second electroconductive layer, wherein
the first electroconductive layer contains a first thermoplastic resin and first electroconductive particles, and at least a part of the first electroconductive particles penetrate the thickness of the first electroconductive layer, and
the second electroconductive layer contains a second thermoplastic resin and electroconductive fibers, and the electroconductive fibers are arranged to spread in the plane direction of the second electroconductive layer.

2. The electroconductive sheet according to Claim 1, including the first electroconductive layer, the second electroconductive layer, and the other first electroconductive layer in this order.

3. The electroconductive sheet according to Claim 1, including the second electroconductive layer, the first electroconductive layer, and the other second electroconductive layer in this order.

4. The electroconductive sheet according to Claim 1 or 2, wherein the first electroconductive particle has a particle diameter, as measured by laser diffraction method, of 100 µm or more and 300 µm or less.

5. The electroconductive sheet according to Claim 1 or 2, wherein the first electroconductive particle is a carbonaceous particle.

6. The electroconductive sheet according to Claim 1 or 2, wherein the electroconductive fibers are carbon fibers.

7. The electroconductive sheet according to Claim 1 or 2, wherein the second electroconductive layer further contains a second electroconductive particle.

8. The electroconductive sheet according to Claim 1 or 2, wherein the first thermoplastic resin contains at least polyamide.

9. The electroconductive sheet according to Claim 1 or 2, wherein the second thermoplastic resin contains at least polyphenylene sulfide or polyamide.

10. The electroconductive sheet according to Claim 1 or 2, which is a separator for a fuel cell.

11. A fuel cell including the electroconductive sheet according to Claim 10.
